Europäisches Patentamt

European Patent Office

Office européen des brevets

(11) Veröffentlichungsnummer: **0 252 349**
**B1**

## (12) EUROPÄISCHE PATENTSCHRIFT

(45) Veröffentlichungstag der Patentschrift:
**30.08.89**

(21) Anmeldenummer: **87108771.4**

(22) Anmeldetag: **19.06.87**

(51) Int. Cl.⁴: **B65G 39/08,** B65G 47/82,
B23K 11/36

(54) Fördervorrichtung für Bleche, insbesondere an einer Dosenschweissmaschine.

(30) Priorität: **07.07.86 CH 2738/86**

(43) Veröffentlichungstag der Anmeldung:
**13.01.88 Patentblatt 88/2**

(45) Bekanntmachung des Hinweises auf die Patenterteilung:
**30.08.89 Patentblatt 89/35**

(84) Benannte Vertragsstaaten:
**CH DE ES FR GB IT LI NL SE**

(56) Entgegenhaltungen:
**AT-B- 353 169
DE-A- 3 513 703
DE-B- 1 296 574**

(73) Patentinhaber: **ELPATRONIC AG, Baarerstrasse 117,
CH-6300 Zug(CH)**

(72) Erfinder: **Kramer, Felix, Im Aemmet 3,
CH-8964 Friedlisberg(CH)**
Erfinder: **Westerhold, Günther, Jakobsbrunnenweg 3,
CH-8964 Friedlisberg(CH)**

(74) Vertreter: **Hotz, Klaus, Dipl.-El.-Ing. / ETH, c/o
SOUDRONIC AG Industriestrasse 35 Postfach 11,
CH-8962 Bergdietikon(CH)**

**Beschreibung**

Die Erfindung betrifft eine Fördervorrichtung für Bleche, insbesondere an einer Dosenschweißmaschine, mit
- Magnetrollen, die für den Transport von an ihnen haftenden Blechen drehantreibbar sind und Zwischenräume zwischen sich freilassen, und
- einer Anzahl Stößel, die kammartig durch die Zwischenräume zwischen den Magnetrollen greifend aus einer zurückgezogenen Stellung, in der sie die an den Magnetrollen haftenden Bleche freilassen, in eine Stellung bewegbar sind, in der sie die Bleche in einem Abstand von den Magnetrollen halten.

Bei einer bekannten Fördervorrichtungen dieser Gattung (Prospekt "Magnetrollen Seila Eriez", Belley, Schweiz, 1984) sind die Stößel mit eigenen Haftmagneten ausgerüstet und haben die Aufgabe, Bleche von einem Stapel abzuheben und soweit nach oben zu bewegen, bis sie an den Magnetrollen hängenbleiben, um von diesen weitergefördert zu werden. Dabei kommt nur die Oberseite der Bleche mit den Magnetrollen und den Stößeln in Berührung, sodaß die Unterseite der Bleche geschont wird.

Eine solch schonende Handhabung ist unter anderem bei Blechen erforderlich, die zu Dosenzargen verarbeitet werden und an der Seite, die später die Innenseite der Dosenzargen bildet, lackiert worden sind. Solche Bleche können, sofern sie für aufreißbare Dosen vorgesehen sind, nach dem Lackieren mit Ritzungen versehen werden, die einen Aufreißstreifen begrenzen; am Aufreißstreifen wird dann eine Zuglasche befestigt, beispielsweise angeschweißt. Anschließend werden die Bleche einer Rundestation zugeführt, in der sie zu zylindrischen Körpern gerollt werden, um schließlich an ihren aneinanderliegenden Längsrändern stumpf oder überlappt geschweißt zu werden. Auf dem Weg in die Rundestation müssen die Bleche, damit ihre Lackierung nicht beschädigt wird, besonders vorsichtig, einzeln und möglichst kontinuierlich gefördert werden; jegliche Zwischenstapelung bedeutet eine Gefahr für die Lackierung, da die Zuglasche jedes Blechs eine Erhebung bildet, welche die Lackierung eines darauf- oder darunterliegenden Blechs zerkratzen kann.

Der Erfindung liegt deshalb die Aufgabe zugrunde, eine Fördervorrichtung der eingangs beschriebenen Gattung derart zu gestalten, daß die Bleche schonend und ohne Zwischenstapelung einer weiterverarbeitenden Station, inbesondere einer Blechrundestation, zugeführt werden können.

Die Aufgabe ist erfindungsgemäß dadurch gelöst, daß
- die Bewegung der Bleche in Förderrichtung der Magnetrollen durch einen Anschlag begrenzt ist,
- die Stößel in einer Stellung, in der sie ein Blech von den Magnetrollen abgedrückt haben, mit dem Blech quer zur Förderrichtung der Magnetrollen bewegbar sind und
- seitlich neben den Magnetrollen eine Abziehvorrichtung angeordnet ist, die die durch die Stößel von den Magnetrollen wegbewegte Bleche weiterfördert.

Die erfindungsgemäße Fördervorrichtung eignet sich besonders gut für Bleche, die nahe einem seitlichen Rand mindestens eine Erhebung, insbesondere eine Zuglasche aufweisen. Für solche Bleche ist die erfindungsgemäße Vorrichtung vorzugsweise dadurch weitergebildet, daß
- beiderseits der Magnetrollen je eine seitliche Führung angeordnet ist und
- die Magnetrollen zwischen sich und einer der seitlichen Führungen einen Freiraum für die Erhebungen der Bleche freilassen.

Vorzugsweise weist mindestens einer der Stößel einen Mitnehmer für den Quertransport der Bleche auf.

Es ist ferner vorteilhaft, wenn die Stößel an Parallelogrammlenkern gelagert sind. Dabei genügen Schwenkungen der Parallelogrammlenker, um ein Blech von den Magnetrollen wegzudrücken und quer zur Förderrichtung der Magnetrollen zu bewegen.

Die Stößel bestehen vorzugsweise aus unmagnetischem Material, beispielsweise Messing oder Kunststoff. Damit wird erreicht, daß die Bleche, nachdem die Stößel sie von den Magnetrollen weggedrückt haben, nur durch das Magnetfeld der Magnetrollen an den Stößeln haftenbleiben und sich von diesen leicht lösen, sobald die Stößel um eine bestimmte Strecke zwischen den Magnetrollen herausragen.

Schließlich ist es vorteilhaft, wenn der genannte Anschlag gemeinsam mit den Stößeln bewegbar ist.

Ein Ausführungsbeispiel der Erfindung wird im folgenden anhand schematischer Zeichnungen mit weiteren Einzelheiten erläutert. Es zeigt:

Fig. 1 die Draufsicht einer erfindungsgemäßen Fördervorrichtung,
Fig. 2 eine Seitenansicht eines Teils der Fördervorrichtung in Richtung des Pfeils II in Fig. 1,
Fig. 3 die Teilansicht in Richtung des Pfeils III in Fig. 2,

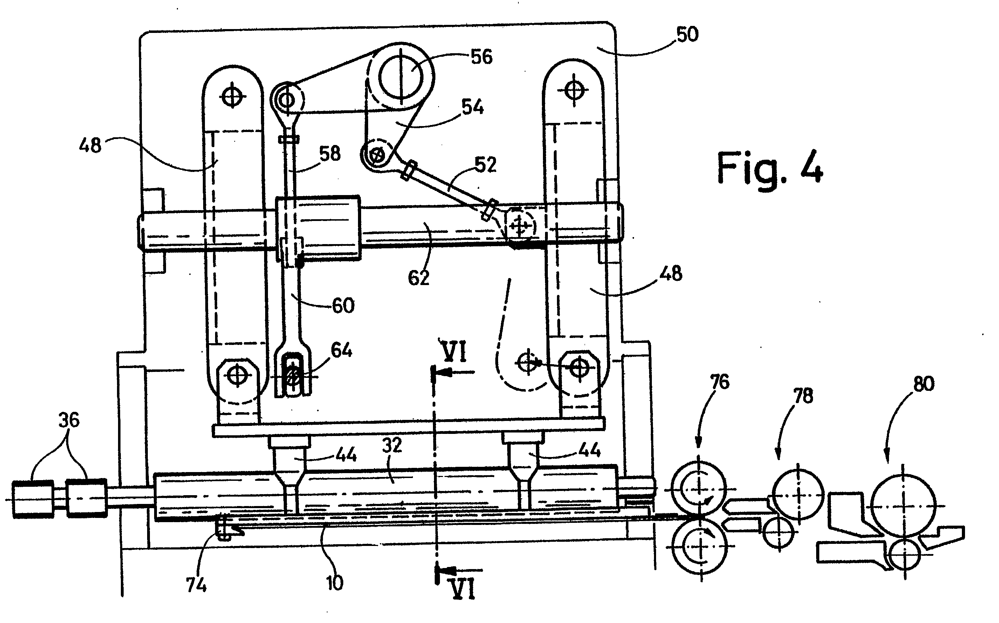

Fig. 4 eine entsprechende Teilansicht in einer anderen Arbeitsstellung der Vorrichtung,
Fig. 5 den Teilschnitt V-V in Fig. 3 und
Fig. 6 den Teilschnitt VI-VI in Fig. 4.

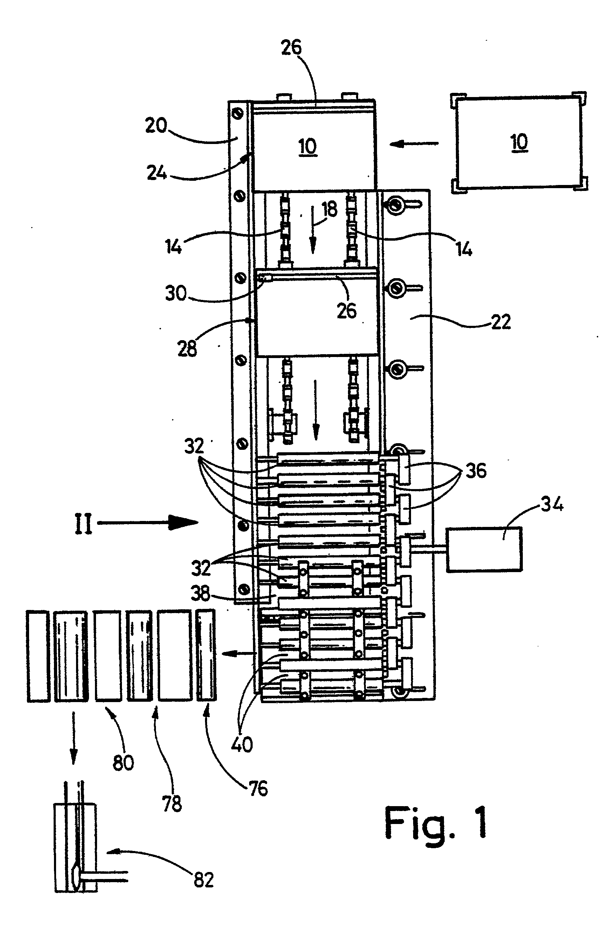

Bleche 10 von einem Stapel werden einzeln nacheinander auf ein Paar Förderketten 14 aufgelegt, die mit paarweise angeordneten Mitnehmern 16 zum Bewegen der Bleche 10 in einer Förderrichtung 18 ausgerüstet und zwischen zwei seitlichen Führungen 20 und 22 angeordnet sind. Der Abstand der Führungen 20 und 22 voneinander ist entsprechend der Blechbreite derart einstellbar, daß die Bleche 10 zwischen den Führungen nahezu spielfrei geführt werden. In Fig. 1 sind die Führungen 20 und 22 als Führungsschienen dargestellt; es können jedoch auch Gruppen von Führungsrollen vorgesehen sein, die um je eine senkrechte Achse drehbar sind.

Die Bleche 10 durchlaufen eine Ritzstation 24, in der sie zwei parallele, einen Aufreißstreifen 26 begrenzende Ritzungen erhalten; anschließend durchlaufen die Bleche 10 eine Schweißstation 28, in der auf den Aufreißstreifen 26 eine Erhebung 30 in Gestalt einer Zuglasche aufgeschweißt wird, die das Aufreißen einer aus dem betreffenden Blech 10 hergestellten Dose erleichtern soll.

Einzelheiten der Gestaltung des Stapels, einer Vorrichtung zum Entstapeln der Bleche 10, der Ritzstation 24 und der Schweißstation 28 ergeben sich aus der älteren Patentanmeldung EP-A 0 196 494, die am 08.10.86 veröffentlicht wurde, und sind im vorliegenden Zusammenhang nicht erläuterungsbedürftig.

Von Bedeutung ist, daß die mit je einer Erhebung 30 versehenen Bleche 10 für ihre weitere Verarbeitung, im dargestellten Beispiel zu Dosenzargen, weitergefördert werden, ohne derart übereinandergeschoben oder aufeinandergestapelt zu werden, daß die Erhebung 30 eines unteren Blechs die Unterseite eines darüberliegenden Blechs berühren würde.

Um eine solche Berührung zu vermeiden, werden die Bleche 10 einzeln hintereinander an Magnetrollen 32 haftend, im dargestellten Beispiel hängend, weitergefördert. Die Magnetrollen 32 sind im Anschluß an die Förderketten 14 in deren Förderrichtung 18 hintereinander angeordnet und von einem Motor 34 über Treibriemen 36 ständig mit gleicher Umfangsgeschwindigkeit in einer solchen Drehrichtung antreibbar, daß die Bewegungsrichtung der Unterseite der Magnetrollen 32 mit der Förderrichtung 18 übereinstimmt. Um zu vermeiden, daß die Magnetrollen 32 die Erhebungen 30 berühren, ist zwischen ihnen und der Führung 20, in deren Nähe die Erhebungen 30 auf die Bleche 10 aufgeschweißt worden sind, ein Freiraum 38 vorgesehen, dessen Breite etwas größer ist als die in Längsrichtung der Aufreißstreifen 26 gemessene Länge der Erhebungen 30.

Zwischen je zwei benachbarten Magnetrollen 32 ist ein Zwischenraum 40 vorgesehen. Die Zwischenräume zwischen der ersten bis siebten Magnetrolle 32 sind von ortsfesten Zwischengliedern 42 teilweise ausgefüllt, sodaß die Bleche 10 daran gehindert sind, sich zwischen diesen Magnetrollen zu verfangen. Die Zwischenräume 40 zwischen der siebten und dreizehnten Magnetrolle 32 sind von entsprechend gestalteten Stößeln 44 aus Messing teilweise ausgefüllt, die von einer gemeinsamen, oberhalb der Magnetrollen 32 angeordneten Platte 46 herabhängen und gemeinsam mit dieser beweglich sind.

Die Beweglichkeit der Stößel 44 ergibt sich daraus, daß die Platte 46 an Parallelogrammlenkern 48 aufgehängt ist, die an einem Gestell 50 schwenkbar gelagert sind. Zum Schwenken der Parallelogrammlenker 48 ist einer von ihnen über eine längeneinstellbare erste Stange 52 und einen ersten Winkelhebel 54, der auf einer ersten Achse 56 am Gestell 50 gelagert ist, und durch eine zweite längeneinstellbare Stange 58 mit einem zweiten Winkelhebel 60 verbunden. Der zweite Winkelhebel 60 ist um eine zweite Achse 62 schwenkbar ebenfalls am Gestell 50 gelagert und durch eine dritte längeneinstellbare Stange 64 mit einem dritten Winkelhebel 66 verbunden, der über eine Kurvenscheibe 68 von einem Motor 70 schrittweise schwenkbar ist.

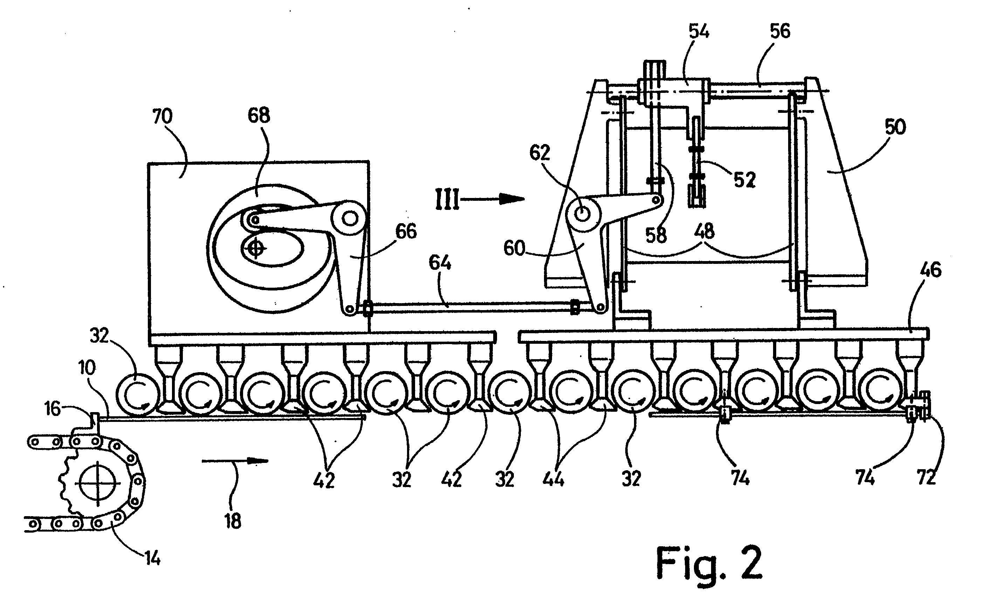

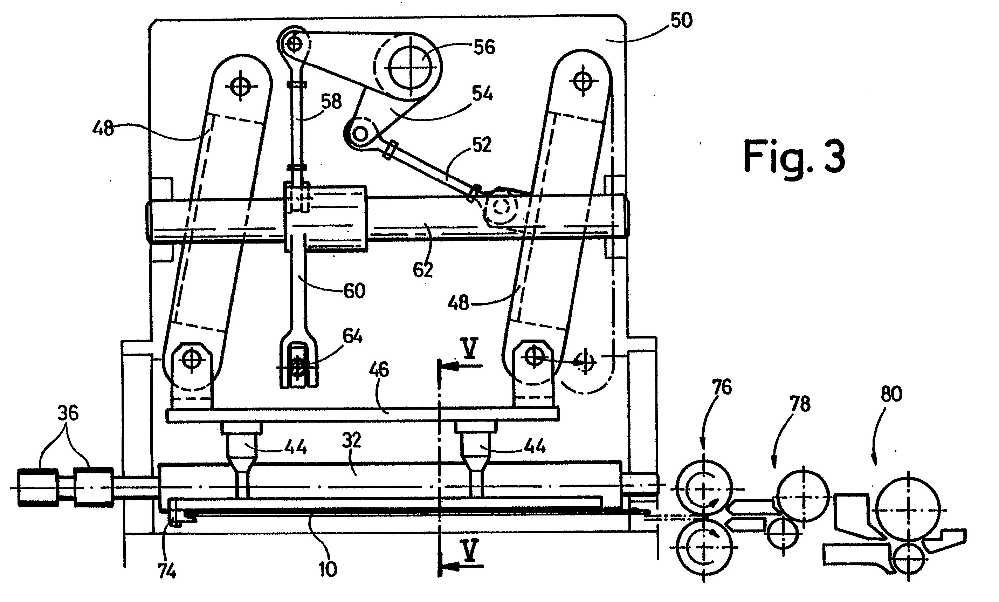

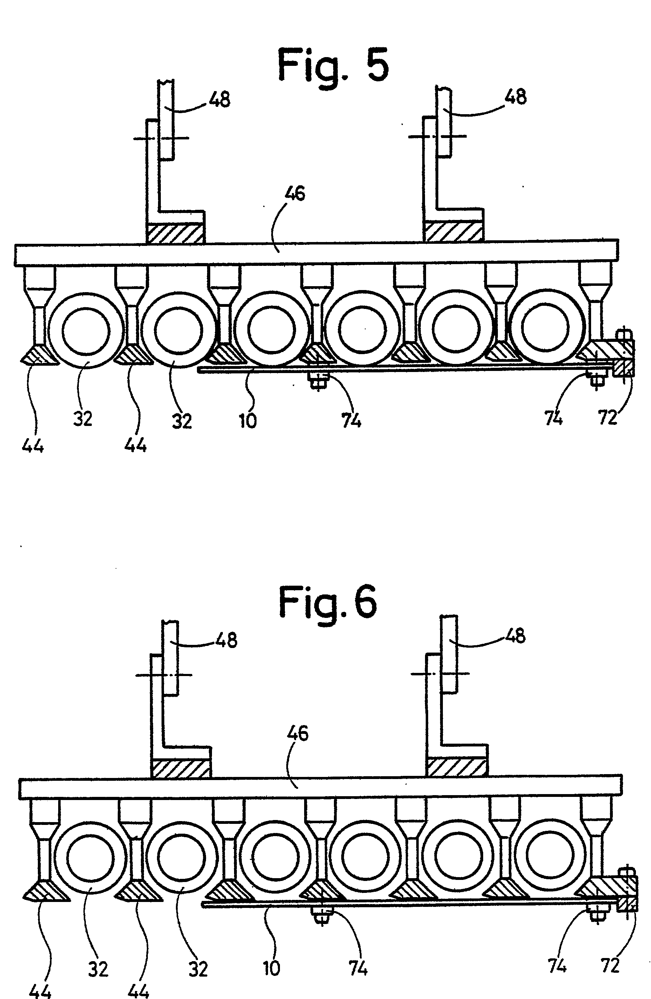

Bei jeder vollen Umdrehung des Motors 70 führen die Stößel 44 einen Bewegungszyklus aus. Dieser beginnt in einer in Fig. 2, 3 und 5 abgebildeten oberen Endstellung, in der die Stößel 44 derart zwischen den Magnetrollen 32 angeordnet sind, daß sie die an den Magnetrollen hängend herangeführten Bleche 10 nicht berühren. Ein Bewegungszyklus beginnt, beispielsweise durch einen Sensor ausgelöst, jeweils dann, wenn ein Blech 10 mit seiner in Förderrichtung 18 vorderen Kante gegen einen Anschlag 72 gestoßen ist, der an dem in Förderrichtung letzten Stößel 44 befestigt ist. Zwei der vor dem Anschlag 72 angeordneten Stößel 44 haben je einen hakenförmigen Mitnehmer 74.

Zu Beginn jedes Bewegungszyklus werden die Stößel 44 abgesenkt, sodaß sie das am Anschlag 72 angestoßene und von den Mitnehmern 74 gehaltene Blech 10 nach unten von den Magnetrollen 32 abdrücken und seitlich in Längsrichtung der Magnetrollen, also quer zur Förderrichtung 18, von der Führung 22 weg verschieben. Nach einer halben Umdrehung der Kurvenscheibe 68 erreichen die Stößel 44 eine Stellung, in der sie das von ihnen bewegte Blech 10 in eine Abziehvorrichtung 76 einschieben, die im dargestellten Beispiel von einem drehantreibbaren Walzenpaar gebildet ist.

Von dort gelangt jedes einzelne Blech 10 in einen Flexer 78, der das Blech 10 durch Hin- und Herbiegen von inneren Spannungen befreit. Anschließend wird jedes Blech 10 in einer Rundestation 80 zu einem zylindrischen Körper gerollt und sodann in Richtung der Längsachse dieses zylindrischen Körpers einen Schweißvorrichtung 82 zugeführt. Flexer 78, Rundestation 80 und Schweißvorrichtung 82 sind von bekannter Bauart und im vorliegenden Zusammenhang nicht erläuterungsbedürftig.

## Patentansprüche

1. Fördervorrichtung für Bleche (10), insbesondere an einer Dosenschweißmaschine, mit
- Magnetrollen (32), die für den Transport von an ihnen haftenden Blechen (10) drehantreibbar sind und Zwischenräume (40) zwischen sich freilassen, und
- einer Anzahl Stößel (44), die kammartig durch die Zwischenräume (40) zwischen den Magnetrollen (32) greifend aus einer zurückgezogenen Stellung, in der sie die an den Magnetrollen (32) haftenden Bleche (10) freilassen, in eine Stellung bewegbar sind, in der sie die Bleche (10) in einem Abstand von den Magnetrollen (32) halten,
dadurch **gekennzeichnet,** daß
- die Bewegung der Bleche (10) in Förderrichtung (18) der Magnetrollen (32) durch einen Anschlag (72) begrenzt ist,
- die Stößel (44) in einer Stellung, in der sie ein Blech (10) von den Magnetrollen (32) abgedrückt haben, mit dem Blech (10) quer zur Förderrichtung (18) der Magnetrollen (32) bewegbar sind und
- seitlich neben den Magnetrollen (32) eine Abziehvorrichtung (76) angeordnet ist, die die durch die Stößel (44) von den Magnetrollen (32) wegbewegte Bleche (10) weiterfördert.

2. Fördervorrichtung nach Anspruch 1 für Bleche (10), die nahe einem seitlichen Rand je mindestens eine Erhebung (30) aufweisen, dadurch **gekennzeichnet,** daß

- beiderseits der Magnetrollen (32) je eine seitliche Führung (20, 22) angeordnet ist und
- die Magnetrollen (32) zwischen sich und einer der seitlichen Führungen (20) einen Freiraum (38) für die Erhebungen (30) der Bleche (10) freilassen.

3. Fördervorrichtung nach Anspruch 1 oder 2, dadurch **gekennzeichnet,** daß mindestens einer der Stößel (44) einen Mitnehmer (74) für den Quertransport der Bleche (10) aufweist.

4. Fördervorrichtung nach einem der Ansprüche 1 bis 3, dadurch **gekennzeichnet,** daß die Stößel (44) an Parallelogrammlenkern (48) gelagert sind.

5. Fördervorrichtung nach einem der Ansprüche 1 bis 4, dadurch **gekennzeichnet,** daß die Stößel (44) aus unmagnetischem Material bestehen.

6. Fördervorrichtung nach einem der Ansprüche 1 bis 5, dadurch **gekennzeichnet,** daß der genannte Anschlag (72) gemeinsam mit den Stößeln (44) bewegbar ist.

## Claims

1. A conveying device for metal sheets (10), particularly on a can welding machine, having
- magnetic rollers (32) which can be driven in rotation for conveying sheets (10) adhering to them and which leave gaps (40) between themselves, and
- a plurality of pushers (44) which, engaging in a comb-like manner through the gaps (40) between the magnetic rollers (32), are movable out of a retracted position in which they leave free the metal sheets (10) adhering to the magnetic rollers (32), into a position in which they hold the sheets (10) at a distance from the magnetic rollers (32), characterised in that
- the movement of the sheets (10) in the conveying direction (18) of the magnetic rollers (32) is limited by a stop (72),
- in a position in which they have pushed a sheet (10) down from the magnetic rollers (32), the pushers (44) can be moved, with the sheet (10), transversely to the conveying direction (18) of the magnetic rollers (32), and
- disposed beside the magnetic rollers (32) is a withdrawal device (76) which effects the onward conveying of sheets (10) which have been moved away from the magnetic rollers (32) by the pushers (44).

2. A conveying device as claimed in Claim 1 for metal sheets (10) which each comprise at least one raised portion (30) close to one lateral edge, characterised in that
- disposed at each side of the magnetic rollers (32) is a lateral guide (20, 22), and
- between themselves and one of the lateral guides (20), the magnetic rollers (32) leave a space (38) free for the raised portions (30) of the sheets (10).

3. A conveying device as claimed in Claims 1 or 2, characterised in that at least one of the pushers (44) comprises a pusher dog (74) for the transverse conveying of the sheets (10).

4. A conveying device as claimed in any one of Claims 1 to 3, characterised in that the pushers (44) are mounted on parallelogram links (48).

5. A conveying device as claimed in any one of Claims 1 to 4, characterised in that the pushers (44) consist of non-magnetic material.

6. A conveying device as claimed in any one of Claims 1 to 5, characterised in that said stop (72) is movable jointly with the pushers (44).

## Revendications

1. Dispositif de transport de tôles (10), en particulier sur une machine à souder des boîtes, comportant:
- des rouleaux magnétiques (32) qui sont entraînés en rotation pour le transport de tôles adhérant à ceux-ci, et qui laissent entre eux des espaces intermédiaires (40) et
- un certain nombre de poussoirs (44) qui, s'engageant à la manière d'un peigne, à travers les espaces intermédiaires (40) compris entre les rouleaux magnétiques (32), passent d'une position retirée dans laquelle ils laissent les tôles (10) adhérer aux rouleaux magnétiques (32), à une position dans laquelle ils maintiennent les tôles (10) à une certaine distance des rouleaux magnétiques (32), caractérisé en ce que:
- le déplacement des tôles (10) dans le sens de transport (18) des rouleaux magnétiques (32) est limité par une butée (72),
- les poussoirs (44) peuvent être déplacés dans une position dans laquelle ils ont éloigné une tôle (10) des rouleaux magnétiques (32) avec la tôle (10) perpendiculaire au sens des transports (18) des rouleaux magnétiques (32) et
- en ce qu'un dispositif d'extraction (76) est disposé sur les côtés des rouleaux magnétiques (32), et qui évacue les tôles (10) éloignées des rouleaux magnétiques (32) par les poussoirs (44).

2. Dispositif de transport selon la revendication 1 de tôles (10) qui comportent chacune au moins un relief (30), à proximité d'un bord latéral, caractérisé en ce que:
- un organe de guidage latéral (20, 22) est placé sur chacun des deux côtés des rouleaux magnétiques, et
- les rouleaux magnétiques (32) laissent un espace libre (38) pour les reliefs (30) des tôles (10), entre eux et l'un des organes de guidage latéral (20).

3. Dispositif de transport selon la revendication 1 ou 2, caractérisé en ce qu'au moins l'un des poussoirs (44) comporte un entraîneur (74) pour le transport transversal des tôles (10).

4. Dispositif de transport selon l'une des revendications 1 à 3, caractérisé en ce que les poussoirs (44) sont montés sur des bras de parallélogramme (48).

5. Dispositif de transport selon l'une des revendications 1 à 4, caractérisé en ce que les poussoirs (44) sont réalisés dans un matériau non magnétique.

6. Dispositif de transport selon l'une des revendications 1 à 5, caractérisé en ce que ladite butée (72) peut se déplacer en même temps que les poussoirs (44).

Fig. 1

Fig. 2

EP 0 252 349 B1

Fig. 3

Fig. 4

EP 0 252 349 B1

# Fig. 5

# Fig. 6